Europäisches Patentamt

European Patent Office

Office européen des brevets

(11) Publication number: **0 422 776 A2**

# EUROPEAN PATENT APPLICATION

(21) Application number: 90309936.4

(22) Date of filing: **11.09.90**

(51) Int. Cl.5: **G06F 13/28**

(30) Priority: **11.10.89 US 419864**

(43) Date of publication of application:
**17.04.91 Bulletin 91/16**

(84) Designated Contracting States:
**BE CH DE FR GB IT LI NL SE**

(71) Applicant: **International Business Machines
Corporation
Old Orchard Road
Armonk, N.Y. 10504(US)**

(72) Inventor: **Heimsoth, Arthur Jacob**
8501 N.W. 38th Street
**Coral Springs, Florida 33065(US)**
Inventor: **Hoch, Gary Brian**
**11062 N.W.15th Street**
**Coral Springs, Florida 33071(US)**
Inventor: **Williams, Donald Glen**
**3101 Lakeview Boulevard**
**Delray Beach, Florida 33445(US)**

(74) Representative: **Burt, Roger James, Dr.
IBM United Kingdom Limited Intellectual
Property Department Hursley Park
Winchester Hampshire SO21 2JN(GB)**

(54) Serial communication apparatus for receiving serial communication status data with a DMA controller.

(57) A communication subsystem (CS) which includes a processor (308), a bus (310), a memory (306), a serial communication control (SCC) device (304), and a direct memory access control unit (DMAC) (302). DMAC hardware assist is used to automatically read the status information in the SCC (304) at the end of eaoh received data frame without intervention of the processor (308), store the status information for each receive data frame in a predefined location in the memory (306) for later use by the processor (308), and reset the status information in the communicating subsystem prior to receiving the next data frame. Multiple SCCs (304) can optionally be attached to each DMAC (302), and multiple DMACs (302) can optionally be used.

FIG. 3

# SERIAL COMMUNICATION APPARATUS FOR RECEIVING SERIAL COMMUNICATION STATUS DATA WITH A DMA CONTROLLER

The present invention relates to a serial communication system and specifically to the transfer of status information from a serial communication control device to system memory in a computer or terminal.

A microprocessor with a communication subsystem (CS) for high speed (64 Kb/s and above) serial data communication typically consists of a processor, memory, a direct memory access control (DMAC) unit, and a serial communication control (SCC) device. The SCC, in turn, usually includes a Receiver Status Register (RSR) which is used to hold error status bits. The CS may be used as an intelligent I/O adapter to host computer because it contains its own processor. Many CS's are known which are implemented using the above described hardware. These CS's will typically support both serial data transmission and serial data reception at the same time (i.e., full-duplex operation).

In a typical CS implementation, the SCC will perform such tasks as protocol handling and data framing for transmission formats such as HDLC (High-level Data Link Control) or SDLC (Synchronous Data Link Control). HDLC and SDLC formats are well known in the art. Each unit of data transferred in the SDLC/HDLC format will be hereinafter referred to as a data frame. The incoming data stream is comprised of a series of individual data frames. A data frame has the following general format:

1- A leading flag field (Binary '01111110')
2- An address field
3- A data field
4- CRC fields (error information)
5- A trailing flag field (Binary '01111110')

In addition to the data frames described above, a second format may be used for the transfer of control information.

Control information as small as four bytes are typical, while even two bytes are possible. Typical, data frames containing control information have the following general format:

1- A leading flag field (Binary '01111110')
2- Control information
3- CRC fields (error information)
4- A trailing flag field (Binary '01111110')

In prior art systems, the SCC will automatically recognize the leading and trailing flag sequences (01111110) and usually strip them from the incoming data stream. The flags in items 1 and 4, above are shown as two distinct flags. However, in practice, they may be shared flags. By definition, shared flags means that the trailing flag of one data frame is the leading flag of the next data frame (this is typical of high throughput serial communication lines). In addition, SCC often strips the CRC fields from the end of the data frame after updating the error status in the RSR. This is usually done as a programming option. Stripping the flag and CRC fields from the data frame by the SCC allows the DMAC to move only address information and data to the buffer areas in memory for later processing.

Once a complete data frame has been received and read into memory by the DMAC, the SCC will raise an interrupt to the processor indicating the end-of-message (EOM) condition. At this point, the received data frame is safely stored in memory but the integrity of the data is still in question. The data may have been received with a CRC error, or an overrun of the receive data buffer within the SCC may have occurred, thereby causing data to be lost. When the SCC detects an error condition, it will turn on the appropriate bit in the RSR. In either case, it is the processor's responsibility to interrogate the RSR within the SCC to see if any error conditions have been detected.

Most commonly used SCC devices do not queue up received status information on a frame by frame basis. Instead, the received status bits from multiple data frames will be OR'ed together if two frames or more are received before the RSR has been read and cleared by the processor. The OR'ing of error status information in the SCC leads to a critical code path. When the processor receives the EOM interrupt, it must ensure that it has read, stored and cleared RSR contents reflecting the first frame before the next frame has been completely received. If the second frame is received, and the first frame has had an error (for example, a CRC error), then when the CRC error bit is interrogated by the processor, the RSR will contain the OR'ed sum of error bits from two data frames. In this situation, the processor will not be able to determine which of the two received frames had the error. A typical implementation of the code needed to service the EOM interrupt might take fifteen to twenty instructions. With the sixteen bit microprocessors available today, this will take fifteen to twenty microseconds. In addition, when typical interrupt latencies are factored in (for example, disabled interrupt time due to other system critical code, and interrupt nesting), average service times can easily exceed one hundred microseconds.

Some SCC devices will do some queueing of received status information. However, the queue size is typically limited by available space on the SCC chip and rarely exceeds more than a few bytes. These SCC systems can alleviate the above described problems in some systems where interrupt traffic is low. The drawback to these systems is the added cost to the SCC device given the low level of interrupt traffic in the CS. In CS's with heavy interrupt traffic to the controlling processor, the processor may be doing many other things than just controlling interrupts from the SCC. Various parts of the data link control (DLC) protocol layer (DLC protocol layers are well known in the art) may be executing under the adapter card's processor, or some lower speed character interrupt serial lines (typically, async protocols) may need servicing of interrupts on a per character basis. All of these factors contribute to the need to have the receive status storing and clearing operation completely removed from any interrupt latency dependencies.

It becomes increasingly difficult for the processor to meet the critical service times described above when serial lines speeds the increased. The problem is further exacerbated as the length of the data frames are reduced. For example, frames as small as four bytes are typical of control information.

By way of example, on a high speed serial communications line running at 1.544 Mb/s, a large data frame containing 1K bytes of data could be followed by a small data frame containing four bytes of data. If the large data frame is received with a CRC error, the CRC error bit for the large data frame will be set once the trailing flag has been received. This leaves only seven byte times (four data bytes, two CRC bytes, and the subsequent trailing flag byte) for the processor to interrogate the RSR. On a 1.544 Mb/s high speed line, these seven bytes take 36.3 microseconds to be transmitted. Therefore, the processor must have read the RSR, stored the status information, and cleared the RSR from the previous data frame in this time or risk losing the ability to distinguish which frame the CRC error is associated with. This will result in requiring retransmission of both data frames to ensure data integrity. Likewise, in the alternative case where the large block is received without error and the small block has the error, the large block will have to be transmitted with the consequent performance degradation even though it was correctly received on the first transmission.

As stated above, latencies of 100 microseconds or more can easily occur. Therefore, although commonly available SCC devices can support data rates exceeding 2 Mb/s, the benefits of increasing line speeds are not fully realized due to the performance costs associated with the unnecessary retransmission of data which results from sharing of the status field by multiple data frames.

An aim of the present invention is to solve the aforementioned problems by extracting status information from an SCC without intervention of a processor.

In accordance with the present invention, there is now provided a communication subsystem for controlling transfer of data and status information between a serial communication control device and a system having a common bus connected to a processor and a memory, comprising: a serial communication control (SCC) device for receiving data frames from input devices, the SCC device connected to the common bus; the SCC device further comprising a receiver status register (RSR) for storing the status of the data frames; a direct memory access control (DMAC) connected to the common bus, to control transfer of data from the SCC device to a first predetermined storage area in the memory, the DMAC further comprising means to read status information from the RSR for each data frame, buffer storage to hold the status information, means to store the status information held in the buffer storage into a second predetermined storage area of the memory for later analysis by the processor, and means to reset the RSR.

Viewing the present invention from a second aspect, there is now provided a system for controlling transfer of data and status information between a serail communication link and a processor, comprising: a common bus; a processor, the processor connected to the common bus; a memory, the memory connected to the common bus; a serial communication control (SCC) device for receiving data frames from input devices, the SCC device connected to the common bus; the SCC device further comprising a receiver status register (RSR) for storing the status of the data frames; a direct memory access control (DMAC) connected to the common bus, to control transfer of data from the SCC device to a first predetermined storage area in the memory, the DMAC further comprising means to read status information from the RSR for each data frame, buffer storage to hold the status information, means to store the status information held in the buffer storage into a second predetermined storage area of the memory for later analysis by the processor, and means to reset the RSR.

Viewing the present invention from a third aspect, there is now provided a system for controlling transfer of data and status information between serial communication control devices and a processor, comprising a common bus; a processor, the processor connected to the common bus; a memory, the memory connected to the common bus; a plurality of serial communication control (SCC) devices for receiving data frames from input devices, the SCC devices connected to the common bus;

each SCC device further comprising a receiver status register (RSR) for storing the status of the data frames; a direct memory access control (DMAC) connected to the common bus, the DMAC further comprising means to control transfer of data from each SCC device to a first predetermined storage area in the memory, means to read status information from each the RSR for each data frame, buffer storage to hold the status information, means to store the status information held in the buffer storage into a second predetermined storage area of the memory for later analysis by the processor, and means to reset each the RSR.

Viewing the present invention from a fourth aspect, there is provided a system for controlling transfer of data and status information between serial communications control device and a processor, comprising: a common bus; a processor, the processor connected to the common bus; a memory, the memory connected to the common bus; a plurality of serial communication control (SCC) devices for receiving data frames from input devices, the SCC devices connected to the common bus; each the SCC device further comprising a receiver status register (RSR) for storing the status of the data frames; a plurality of direct memory access control (DMAC) devices connected to the common bus, each of the DMAC devices associated with at least one of the plurality of SCC devices, the DMAC devices further comprising means to control transfer of data from each the associated SCC device to a first predetermined storage area in the memory, means to read status information from each the RSR in the associated SCC for each data frame, buffer storage to hold the status information, means to store the status information held in the buffer storage into a second predetermined storage area of the memory for later analysis by the processor, and means to reset each the RSR.

Viewing the present invention from a fifth aspect, there is now provided a method for controlling transfer of data and status information between serial communication control devices and a processor, comprising: receiving a data frame with a serial communication control device; transferring the data frame from the serial communication control device to a memory having a first predetermined storage area for storing data; detecting the end of the data frame; generating status information within the serial communication control device; reading the status information with direct memory access means; storing the status information in an internal buffer of the direct memory access means; storing the status information in the internal buffer into a second predetermined area of the memory; and clearing the status information within the serial communication control device. Preferably, the step of storing the status information for each of the data frames in the second predetermined area of memory includes the storing of the status information in the form of a predefined queue.

Viewing the present invention from a sixth aspect, there is now provided a communication system comprising: one or more serial communication control (SCC) devices each connected to a common bus for receiving data frames from a separate input device; each SCC device further comprising a receiver status register (RSR) for storing the status of the data frames; one or more direct memory access control (DMAC) devices connected to the bus and associated with at least one SCC device for controlling data transfer from the associated SCC device to a first predetermined storage area in a memory; characterised in that each DMAC device further comprises: means for reading status information from the RSR in each associated SCC device for each data frame; buffer storage to hold the status information; means for storing the status information held in the buffer storage into a second predetermined storage area of the memory for later analysis by a processor; and means for resetting each RSR in the associated SCC device.

In one example of the present invention, there is provided a communication subsystem comprising DMAC hardware to extract the status information in the SCC each time a frame of data is received. The status information is then written to a predetermined location in memory for later interrogation by a processor. Prior to receipt of the next data frame, the status information in the SCC is reset by the DMAC.

In a preferred example of the present invention to be described later, status information generated by an SCC can be transferred to a memory in an optimized manner. Specifically, in the example, there is provided a communication system in which status information is provided for each individual data frame. The status field is reset field in the SCC prior to receipt of each data frame without intervention of the processor. The status information is queued for each individual data frame in memory.

An embodiment of the present invention will now be described with reference to the accompanying drawings in which:

Figure 1 is a diagram of the SDLC/HDLC data frame format of a data frame containing address and data information.

Figure 2 is a diagram of the SDLC/HDLC data frame format of a data frame containing control information.

Figure 3 is a block diagram showing the components of a system having a single DMAC and a single SCC.

Figure 4 is a flowchart showing the sequence of events in a prior art system and the sequence of events in the invention.

Figure 5 is a block diagram showing the components of the DMAC.

Figure 6 is a block diagram showing the components of a system having a single DMAC and multiple SCCs.

Figure 7 is a block diagram showing the components of a system having multiple DMACs and multiple SCCs.

By way of general overview, time critical code paths in t he processor are typically the limiting factor in serial channel data rates that a CS can support. A scheme has been implemented by this invention in which the processor is assisted in its processing of RSR status information during reception of serial communication data by a hardware assist provided in the DMAC. Time-critical code in the processor, which was used to extract the RSR status information in the SCC, is eliminated by extracting the RSR status information from the SCC with DMAC hardware which then transfers the status information to a queue in memory. The elimination of the requirement for processor control of the acquisition of status information results in a significant reduction of bus utilization during acquisition of SCC status data and the elimination of a system performance bottleneck.

In addition, the DMAC resets the RSR prior to receipt of the next data frame. The hardware transfer of the status information allows status for each individual data frame to be queued in memory and available for later analysis by the processor without the risk of overlaying status information from multiple data frames in the RSR. By avoiding the overlaying of status information, the invention eliminates the unnecessary retransmission of data frames that may have been correctly received, but whose status information was OR'ed with status information concerning data frames which had errors.

In the preferred embodiment, the processor is an industry standard 16-bit microprocessor. Memory is a commonly available DRAM array. The SCC is an industry standard VLSI implementation of the serial-parallel and parallel-serial function typically ascribed to such chips. The processor, memory, and SCC devices are well known in the art. The DMAC is a VLSI implementation of a DMA.

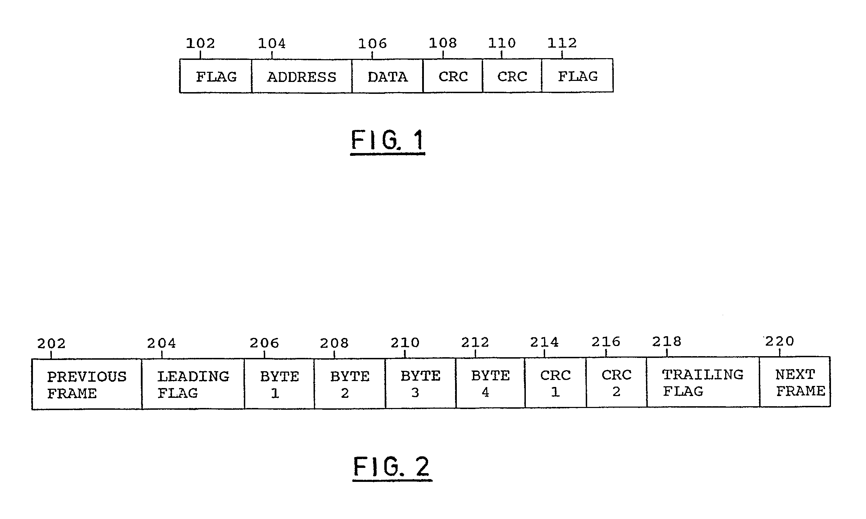

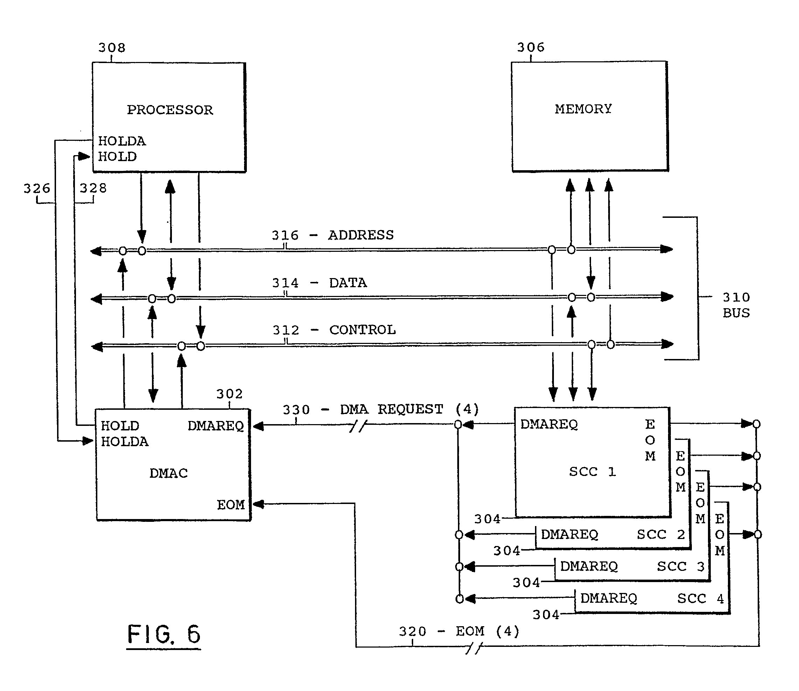

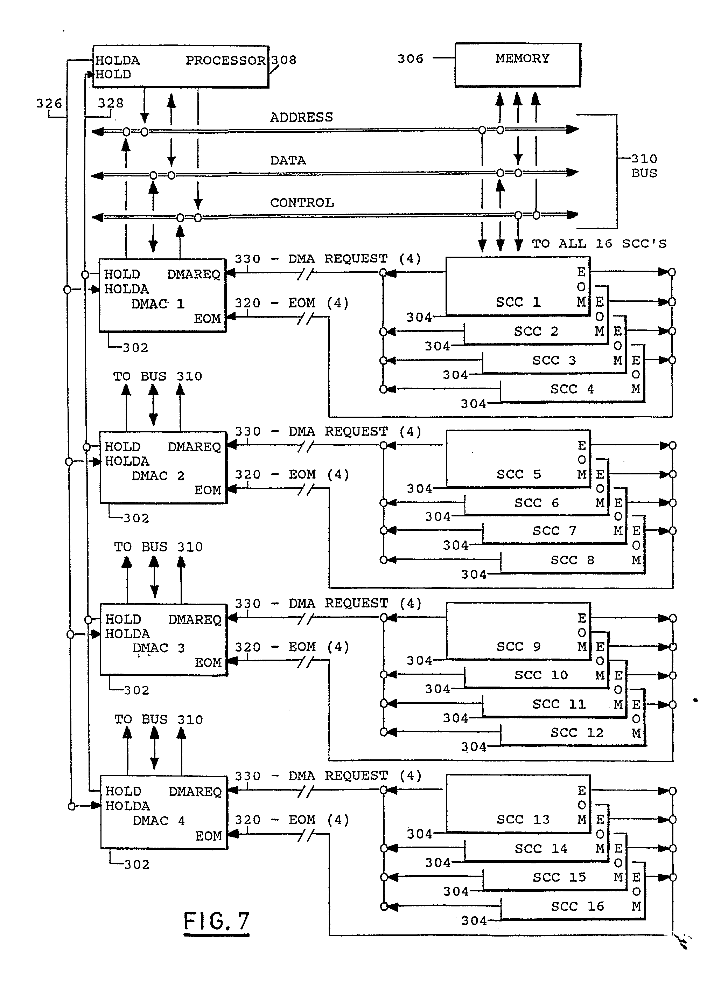

For ease of illustration, the present invention will first be described in terms of a system having a single DMAC and a single SCC. It will be understood by those skilled in the art that, in practice, multiple DMACs may be used which may in turn have multiple SCCs attached to each DMAC. Figures 1 through 5 illustrate the basis system having a single DMAC and a single SCC. Figures 6 and 7, discussed below, show systems having multiple DMACs and SCCs.

Figure 1 shows the SDLC/HDLC data frame format. Each unit of data transferred in the SDLC/HDLC format will be hereinafter referred to as a data frame. The incoming data stream is comprised of a series of individual data frames. A data frame has the following general format: A leading flag field 102 which contains a binary '01111110', an address field 104, a data field 106. CRC fields 108, 110 containing error checking information, and a trailing flag field 112 which contains a binary '01111110'. The leading flag is identical to the trailing flag. In addition, the data field 106 may be as large as 8 KB or larger.

Figure 2 represents a series of data frames 202-220. The data frames 202-220 contain an SDLC/HDLC data frame 204-218 which further contains control information. It differs from the data frame of figure 1 in that the address and data fields are replaced with control information which may be small in size. Figure 2 uses a four byte field for illustration purposes, but the size may vary depending on the nature of the information. As shown by figure 2, there are only seven byte times (four control bytes 206, 208, 210, 212, two CRC bytes 214, 216, and one trailing flag byte 218) in which the processor can read the RSR status information from the previous data frame, and reset the RSR status information prior to setting the status information for the current data frame. As discussed above, this creates a situation in which prior art systems OR'ed status for more than one data frame due to the inability of the processor code to read and clear the RSR prior to receipt of short data frames.

In addition, figure 2 shows the use of shared flags in the data stream. The leading flag 204 of the current data frame is also the trailing flag of the previous data frame 202. Likewise, the trailing flag 218 of the current data frame is also the leading flag of the next data frame 220.

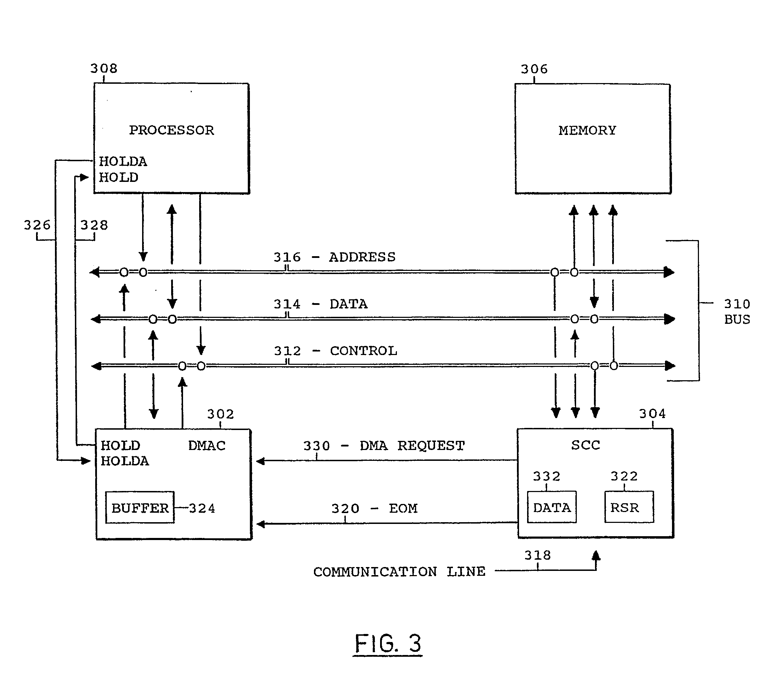

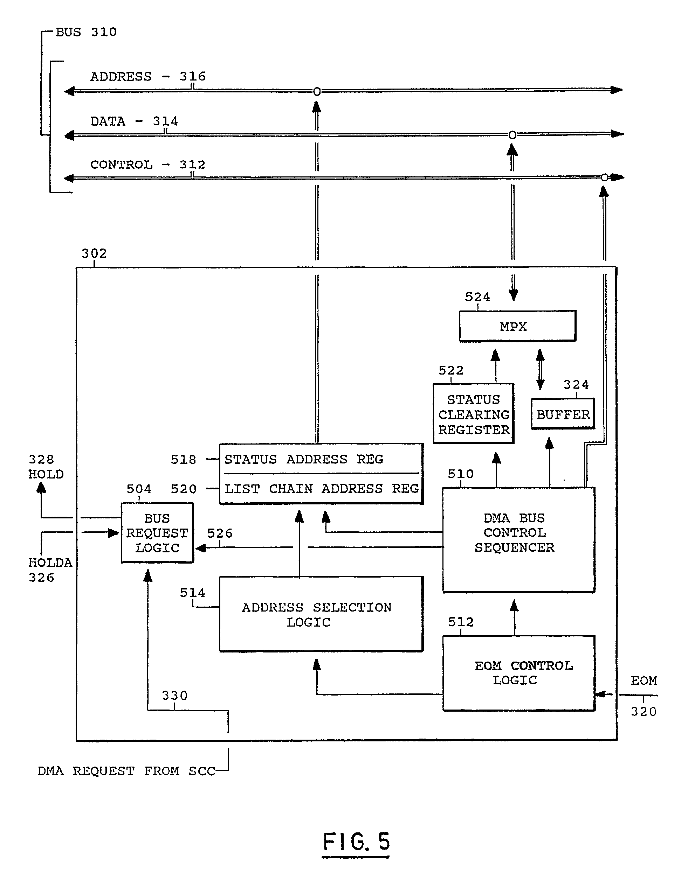

Figure 3 shows the general arrangement of the system. Data on communication line 318 is received by SCC 304. The SCC 304 removes the flag byte 102 (shown in figure 1). Under control of the DMAC 302, address information and data from a data frame 332 is moved on the Bus 310 to a predetermined location in memory 306 (In the alternative case of a data frame containing control information, the control information would be moved from the SCC 304 to memory 306 under control of the DMAC 302). When the EOM is detected by the SCC 304, the DMAC 302 is notified on EOM line 320 and on DMA request line 330. Activation of the DMA request line 330 will cause the DMAC 302 to request control of the Bus 310 via the HOLD line 328. The processor 308 grants control of the bus 310 via the HOLDA line 326. The DMAC 302 will then move the last byte of data from the SCC 304 to the memory 306. DMAC 302 will the read the contents of the RSR 322 into buffer 324. DMAC 302 then clears the RSR 322 prior to receipt of the next data frame. The contents of buffer 324 are then transferred to a queue which occupies predetermined locations in memory 306. Each entry on the queue contains the RSR status information for its respective data frame. The DMAC 302 then releases control of the bus 310 by releasing the HOLD line 328. A more detailed discussion of the internal workings of the DMAC 302 is provided in the description of figure 5, below.

Since the RSR status information is safely stored in memory 306, the processor 308 can take the EOM interrupt without regard for time critical code paths. With a large DRAM memory array, the system can queue up many data frames 332 and process these without the risk of overlaying the RSR 322 with status information from multiple data frames 323.

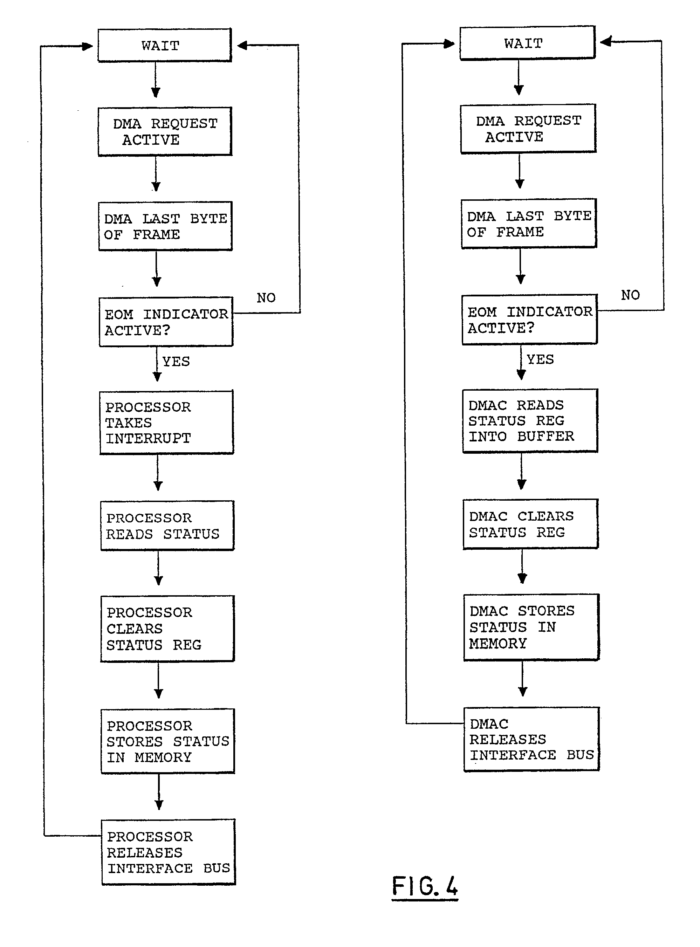

Figure 4 is a flowchart which illustrates the differences in the sequence of events of the prior art and the present invention. As can be seen from the diagram, the prior art and the present invention function identically up to the point where the last byte of the data frame is DMA'ed into memory (transfer of data to and from memory by DMA logic devices is well known in the art). At that point, prior art systems require intervention by the processor to take the ROM interrupt, read the status in the RSR, clear the status in the RSR, store the status in memory, and release the bus interface. As a result, the bus is unavailable from the time the processor takes the interrupt until it releases the bus after storing status in memory.

The present invention does not require intervention by the processor. Instead, the DMAC reads the status from the RSR and stores it internally, clears the RSR, and stores the status information in a queue in memory. As stated above, more than 100 microseconds may elapse from the time the processor in a prior art system takes the EOM interrupt and the time the processor completes processing of the interrupt. On the other hand, the DMAC used in the preferred embodiment takes approximately 560 nanoseconds to read the status information, approximately 560 nanoseconds to clear the RSR status register, and approximately 400 nanoseconds to store the status information in memory. This totals to approximately 1.52 microseconds that the bus will be unavailable in the preferred embodiment as compared to possibly 100 or more microseconds that the bus will be unavailable in the prior art. Further, there is no possibility of additional latencies, since the three bus cycles required to read the RSR register, clear the register, and store the status to memory, occur contiguous with the DMA'ing of the final byte into memory during a single HOLD/HOLDA processor bus grant to the DMAC.

Represented in figure 5 is a block diagram of the DMAC 302 logic used to implement the present invention. First, the DMAC must gain control of the bus 310 to transfer status when the end of the data frame is reached. This is accomplished as follows. The SCC (not shown) provides the EOM signal on line 320 when the last data byte is transferred to memory. In addition, the SCC also provides the DMA request on line 330 as input to the bus request logic 504. The bus request logic 504 raises the HOLD line 328 which has the effect of requesting control of the bus 310 from the processor (not shown). When the processor raises the HOLDA line 326, the DMAC 302 has control of the bus 310.

Second, the status information in the RSR must be read into the DMAC buffer 324. The DMAC 302 accomplishes this as follows. The EOM control logic 512 activates the address selection logic 514 which selects the status address register 518 which contains the RSR address. At the same time, the EOM control logic 512 activates the DMA bus control sequencer 510. The DMA bus control sequencer 510 gates the RSR address in the status address register 518 to the address bus 316 and places a read command on the control bus 312. The contents of the RSR register are read into buffer 324 via the data bus 314 and multiplexor 524. At this point, the status information has been transferred to the DMAC 302.

Third, the RSR has to be cleared. The DMA bus control sequencer 510 does the following to clear the RSR register. It gates the contents of the status clearing register 522 through the multiplexor 524 to the data bus 314. The status clearing register 522 contains a bit configuration indicating non-error status. The address of the RSR contained in the status address register 518 is continued to be gated on the address bus 316. A write command is then placed on the control bus 312 by the DMA bus control sequencer 510 which results in the clear status byte from the status clearing register being written into the RSR. At this point, the RSR status has been cleared in preparation of receipt of the next data frame.

Fourth, the status information contained in the buffer 324 must be transferred to memory 306 (not shown). The DMA bus control sequencer 510 does the following to accomplish the transfer. The memory 306 contains a predefined area containing a queue. Each element of the queue contains a field for storing the status information which relates to the data frame associated with it. The address selection logic 514 selects the list chain address register 520 which contains the address of the next available queue element. The address is gated to the address bus 316 by the DMA bus control sequencer 510. The status information in the buffer 324 is then gated through the multiplexor 524 by the DMA bus control sequencer 510. A write compound is then placed on the control bus 312 by the DMA bus control sequencer 510 which causes the status data to be written to memory 306. The address selection logic then updates the address in the list chain address register 520. At this point, the RSR status has been written into memory 306 for later interrogation by the processor 308 (not shown).

Finally, the DMA bus control sequencer 510 activates bus release line 526. This forces the bus request logic 504 to drop the HOLD line 328, thereby releasing control of the bus 310 to the processor 308.

Figure 6 shows an embodiment of the present invention which is functionally equivalent to the embodiment shown in figure 3 with the following exception. In figure 6, there are four SCCs 304 attached to the DMAC 302. Each SCC 304 is connected to the DMAC 302 by a DMA Request line 330 and an EOM line 320. Transmission of data to memory 306 from each of the SCCs 304 is controlled by the DMAC 302 in the same manner described in the discussion of figure 3. Likewise, the queueing of status information and resetting of the the RSR (not shown) is also controlled by the DMAC 302 in the same manner described in the discussion of figure 3. The additional SCCs 304 merely allow the more economically efficient use of the DMAC 302. It is understood that the four SCCs 304 were selected to illustrate the use of multiple SCCs controlled by a single DMAC 302 and was not intended to indicate a limitation on the number of SCCs 304 which could be attached to DMAC 302. The actual number of SCCs 304 attached to a DMAC 302 will be a design choice dictated by the data rates of the particular I/O devices (not shown) attached to the SCC 304, and other design factors, such as the particular circuit speeds of the DMAC 302 and SCC 304 used in a given implementation.

Figure 7 shows an embodiment of the present invention which is functionally equivalent to the embodiment shown in figure 6 with the following exception. In figure 7, there are four DMACs 302, each having four SCCs 304 attached to the DMAC 302. Each SCC 304 is connected to its respective DMAC 302 by a DMA Request line 330 and an EOM line 320. Transmission of data to memory 306 from each of the SCCs 304 is controlled by the respective DMAC 302 in the same manner described in the discussion of figure 3. Likewise, the queueing of status information and resetting of the the RSR (not shown) is also controlled by the DMAC 302 in the same manner described in the discussion of figure 3. The additional SCCs 304 merely allow the more economically efficient use of the DMAC 302. It is understood that the four DMACs 302 were selected to illustrate the use of multiple DMACs in a system and was not intended to indicate a limitation on the number of DMACs 302 which could be attached to a processor 308. The actual number of DMACs 302 attached to a processor 308 will be a mere design choice dictated by the data rates of the particular I/O devices (not shown) attached to the SCCs 304, the particular circuit speeds of the DMAC 302 and SCC 304, the processing speed of the particular processor 308 used in a given implementation, and other factors such as the particular application programs executing in the processor 308.

While the present invention has been particularly shown and described with reference to preferred embodiments, it will be understood by those skilled in the art that various changes in detail may be made therein without departing from the spirit, scope, and teaching of the present invention. For example, clearing of the RSR register can be done before or after storing of the status information in memory. Likewise, many queueing arrangements are known in the art in addition to the queueing arrangement used in the preferred embodiment. Accordingly, the present invention herein disclosed is to be limited only as specified in the following claims.

## Claims

1. A communication system comprising:
one or more serial communication control (SCC) devices (304) each connected to a common bus (310) for receiving data frames (332) from a separate input device (318); each SCC device (304) further comprising a receiver status register (RSR) (322) for storing the status of the data frames (332);
one or more direct memory access control (DMAC) devices (302) connected to the bus (310) and each associated with at least one SCC device (304) for controlling data transfer from the associated SCC device (304) to a first predetermined storage area in a memory (306);
characterised in that each DMAC device (302) further comprises:
means (518) for reading status information from the RSR (322) in each associated SCC device (304) for each data frame (322);
buffer storage (324) to hold the status information;
means (510) for storing the status information held in the buffer storage (324) into a second predetermined storage area of the memory (306) for later analysis by a processor (308); and
means (522) for resetting each RSR (322).

2. A system as claimed in claim 1 wherein each SCC device (304) has means (320) to signal the associated DMAC (302) when the end of a data frame (332) is detected.

3. A system as claimed in claim 2 wherein each DMAC (302) further includes means (514) to store the status information for multiple data frames in the second predetermined storage area in the form of a predefined queue.

4. A system as claimed in claim 3 wherein each DMAC (302) resets each RSR (322) related to the status information prior to storing the status information in the second predetermined storage area.

5. A system, as claimed in claim 3 wherein each DMAC resets each the RSR (322) relates to the status information after storing the status information in the second predetermined storage area.

6. A computer system comprising a communication system as claimed in any preceding claim.

7. A computer sytem as claimed in claim 6 comprising:

one SCC device (304) for receiving data (332) frames from an input device (318); and

one DMAC device (302) for controlling data transfer from the SCC device (304) to the first predetermined storage area in the memory (306).

8. A computer system as claimed in claim 6 comprising:

a plurality of SCC devices (304) for receiving data frames (332) from input devices (318);

one DMAC device (302) for controlling data transfer from each SCC device (304) to the first predetermined storage area in the memory (306).

9. A computer system as claimed in claim 6 comprising:

a plurality of SCC devices (304) for receiving data frames from input devices (318),

a plurality of DMAC devices (302), each of the DMAC devices (302) associated with at least one of the plurality of SCC devices (304), the DMAC devices (302) further comprising means (510) for controlling data transfer from each associated SCC device (304) to the first predetermined storage area in the memory (306).

10. A method for controlling transfer of data and status information between serial communicating control (SCC) devices (304) and a processor (308), comprising:

receiving a data frame (332) with a SCC device (304);

transferring the data frame (322) from the SCC device (304) to a memory (306) having a first predetermined storage area for storing data;

detecting the end of the data frame (332);

generating status information within the SCC device (304);

reading the status information with direct memory access means (302);

storing the status information in an internal buffer (324) of the direct memory access means (302);

clearing the status information within the SCC device (304); and

storing the status information in the internal buffer (324) into a second predetermined area of the memory (306).

11. A method, as in claim 10, wherein the step of storing the status information for each of the data frames (332) in the second predetermined area of memory (306) includes the storing of the status information in the form of a predefined queue.

FIG. 1

| 102 | 104 | 106 | 108 | 110 | 112 |
|------|---------|------|-----|-----|------|
| FLAG | ADDRESS | DATA | CRC | CRC | FLAG |

FIG. 2

| 202 | 204 | 206 | 208 | 210 | 212 | 214 | 216 | 218 | 220 |
|-------------------|------------------|--------|--------|--------|--------|-------|-------|-------------------|---------------|
| PREVIOUS FRAME | LEADING FLAG | BYTE 1 | BYTE 2 | BYTE 3 | BYTE 4 | CRC 1 | CRC 2 | TRAILING FLAG | NEXT FRAME |

FIG. 3

FIG. 4

FIG. 5

FIG. 6

EP 0 422 776 A2

FIG. 7